# EUROPÄISCHE PATENTSCHRIFT

(11) **EP 1 169 259 B1**
(45) Veröffentlichungstag und Bekanntmachung des Hinweises auf die Patenterteilung: **18.06.2003**
(21) Anmeldenummer: 99926259.5
(22) Anmeldetag: 14.04.1999
(51) Int. Cl.: B66F 7/24, B62B 5/02

(54) **ÜBERROLLSTÜTZE FÜR WEGFAHRHILFE ZUR AUFNAHME VON DEFEKTEN RÄDERN, INSBESONDERE FÜR DEFEKTE KRAFTFAHRZEUGRÄDER**
ROLL SUPPORT FOR AUXILIARY DRIVE SYSTEM, USED TO ACCOMMODATE DEFECTIVE WHEELS, IN PARTICULAR DEFECTIVE MOTOR VEHICLE WHEELS
SUPPORT DE ROULEMENT POUR DISPOSITIF AUXILIAIRE D'EVACUATION DE VEHICULE, DESTINE A RECEVOIR UNE ROUE DEFECTUEUSE, NOTAMMENT DE VEHICULE AUTOMOBILE

(43) Veröffentlichungstag der Anmeldung: 09.01.2002
(73) Patentinhaber: Hönig, Heinz, 6003 Luzern (CH)
(72) Erfinder: KRÜGER, Adolf, D-17111 Wotenick (DE)
(74) Vertreter: Omsels, Hermann-Josef
(86) Internationale Anmeldenummer: DE9901153
(87) Internationale Veröffentlichungsnummer: WO00061486

(56) Entgegenhaltungen:
- WO-A-99/19246
- DE-U- 29 714 890
- DE-U- 29 814 194
- FR-A- 2 676 684
- FR-A- 2 676 685
- US-A- 3 239 872

## Beschreibung

Die Erfindung betrifft eine Überrollstütze für eine Wegfahrhilfe zur Aufnahme von defekten Rädem, insbesondere für defekte Kraftfahrzeugräder gemäß dem Oberbegriff des Anspruchs 1.

Aus der PCT/DE98/02424 (= WO 99/19246) ist eine Wegfahrhilfe bekannt, die als Pannenhilfe für ein infolge eines Reifenschaden liegengebliebenes Kraftfahrzeug dient Der Fahrer kann durch einfaches Auffahren seines Kraftfahrzeuges auf die Vorrichtung durch eigene Motorkraft die nächstliegende Reparaturwerkstatt mit einer Geschwindigkeit von bis zu 30 km/h erreichen. Der Vorteil der Wegfahreinrichtung liegt darin, daß der Fahrer ohne einen mühsamen Radwechsel oder eine komptizierte Reifenreparatur in einer unter Umständen gefährlichen Situation, beispielsweise eine Reifenpanne bei Nacht auf einer kurvenreichen Landstraße ohne Seitenstreifen, in die nächst gelegene Service-Werkstatt aus eigener Kraft fahren kann. Zudem ergibt sich eine Gewichtseinsparung, da die Wegfahrhilfe erheblich leichter als ein vollwertiges Ersatzrad mit Felge ist. Weiterhin nimmt die Wegfahrhilfe weniger Raum als ein Reserverad, so daß zusätzlicher Stauraum entsteht Die PCT/DE98/02424 (= WO 99/19246) wird als nächstliegender Stand der Technik angesehen.

Im wesentlichen wird hierin eine Wegfahrhilfe, insbesondere zur Aufnahme von defekten Kraftfahrzeugrädern beschrieben, bestehend aus einer Wanne zur Aufnahme des defekten Rades sowie einer rückseitig angebrachten Auffahrwippe zum Auffahren des defekten Rades und dem nachfolgenden rückwärtigen Sichern des Rades, wobei beim Auffahren des defekten Rades eine im vorderen Bereich der Vorrichtung an zwei Halteblechen über eine Welle drehbar gelagerte Rolle hochschwenkt, indem das defekte Rad die durch einen Quersteg verbundenen Wippen beim Auffahren nach unten drückt und diese mit ihren nasenförmigen Enden in die entsprechenden Aussparungen der Haltebleche eingreifen und hierdurch das Überfahren der Vorrichtung verhindert wird, wobei gleichzeitig die, zusammen mit den hinteren Laufrollen auf einer Welle gelagerten, beiderseitig wirkenden, exzentrisch gelagerten Bremshebel, die ein Verrutschen der Vorrichtung beim Auffahren verhindern, ohne weiteres Tätigwerden des Benutzers gelöst und durch zwei Federn in die Wegfahrstellung hochgeschwenkt werden. Gleiches ist auch aus den für die WO 99/19246 prioritätsbegründenden DE 297 14 890 U1 und DE 298 14 194 U1 bekannt.

Die PCT/DE98/02424 (= WO 99/19246) nimmt Bezug auf die FR-PS 2 516 022, sowie die DE 41 16 481 A1, die beide als allgemeiner Stand der Technik zu einer Wegfahrhilfe genannt sind. Die vorliegende Erfindung nimmt auch auf diese Druckschriften zum Stand der Technik Bezug. Allgemein werden dort Einrichtungen beschrieben, die aus einem Rohrrahmen besteht, an dem drei Räder befestigt sind (FR-PS 2 516 022). Das vordere Rad ist um 360° schwenkbar angeordnet Am Fahrgestell ist eine Wanne zur Aufnahme und seitlichen Federung des defekten Rades vorgesehen. Die hintere, durchgehende Achse dient gleichzeitig zur exzentrischen Lagerung eines Rampenbleches. Das Rampenblech besteht aus U-förmig gekantetem Blech, wobei die Höhe der Wangen über die Länge hin abnimmt, um das Auffahren des Rades im abgeklappten Zustand zu erleichtern. Im vorderen Bereich des Fahrgestells ist ein halbkreisförmger Rohrbügel angeordnet, der über ein Gestänge hochgeklappt wird, wenn das Rampenblech in die Fahrstellung kippt Hierdurch soll verhindert werden, daß das defekte Rad die Wegfahrhilfe überrollt.

Eine weitere Ausführungsform einer Wegfahrhilfe ist in der DE 41 16 481 A1 offenbart Die Vorrichtung besteht im wesentlichen aus einer Wanne zur Aufnahme und seitlichen Fixierung des defekten Rades, an der vier Räder befestigt sind. Der Boden der Wanne ist W-förmig, entsprechend dem Querschnitt einer Fahrzeugfelge ausgebildet Keines der Räder ist um die Hochachse schwenkbar. Im vorderen Ende der Warme ist ein nasenförmiger Anschlagkörper angeordnet Weiterhin ist ein Spannband nebst manueller Spannvorrichtung am vorderen Ende der Wanne und im hinteren Bereich des Rampenbleches befestigt. Die nach dieser Patentschrift vorgeschlagene Lösung versucht, die Gefahr des Verrutschens der Wegfahrhilfe beim Auffahren mit dem defekten Kraftfahrzeugrad dadurch zu umgehen, daß ein ebenes, nicht gekantetes Rampenblech verwendet wird. Beim Abklappen des Rampenbleches in Auffahrstellung entsteht daher nur ein sehr kleiner Absatz zum Untergrund. Die DE 41 16 481 A1 hat folgenden Nachteil: Für den Fall, daß die mit dem defekten Rad verbundene Wegfahrhilfe gegen ein Hindernis stößt, ist zu befürchten, daß sich das Rad zusammen mit der Wegfahrhilfe in den Radkasten zurückdreht und daher völlig blockiert, wodurch erhebliche Schaden an Insassen und Fahrzeug entstehen können.

Die FR 2,676,684 und FR 2,676,685 beschreiben ebenfalls allgemeinen Stand der Technik zu vorliegender Erfindung.

Die US 3,239, 872 hingegen beschreibt eine Überrollstütze für eine Wegfahrhilfe, die dazu dient, Hindemisse wie Bordsteine zu überfahren. Dabei ist das vordere Laufrad in einer Gabel gehalten, die wiederum in einer beweglichen Überrollstütze beherbergt ist. Beim Vorgang des Überfahrens eines Hindernisses schwenkt die Überrollstütze über das Laufrad hinweg. Nachteilig hieran ist, dass das Laufrad beschädigt werden kann, da die Überrollstütze wie ein "Schutz für das Laufrad wirkt", jedoch weniger wie ein Hebel, um die gesamte Wegfahrhilfe über ein Hindernis zu bringen.

Die obigen aus dem Stand der Technik bekannten Wegfahrhilfen haben den Nachteil, daß sie schwer beschädigt werden können, wenn sie mit einem - wenn auch flachen - Hindernis in Berührung kommen. Ferner ist nachteilig, daß die gesamte Wegfahrhilfe auch schon an kleinen Hindernissen blockiert und nur durch die auf die übrigen Räder übertragene Motorkraft fortbewegt werden kann, was dann jedoch dazu führen würde, daß die Wegfahrhilfe zerstört wird und ihren bestimmungsgemäßen Gebrauch und Zweck nicht mehr erfüllen kann.

Ausgehend von diesem Stand der Technik ist es Aufgabe der vorliegenden Erfindung, ein Mittel zu schaffen, dass es der Wegfahrhilfe ermöglicht, ein Hindernis ohne Schaden für die Wegfahrhilfe zu überfahren.

Gelöst wird diese Aufgabe durch die kennzeichnenden Merkmale des Anspruchs 1. Durch diese erfindungsgemäßen Maßnahmen wird eine Wegfahrhilfe geschaffen, die zusätzlich Verbesserungen aufweist, die die Lebensdauer und auch Belastbarkeit einer derartigen Wegfahrhilfe erheblich erhöhen, nämlich eine an ihrem vorderen Ende bewegliche, Hindernisse überrollenden Überrollstütze. Vorzugsweise ist das vordere Laufrolle hierzu in einer Gabel gehalten ist, an ihrem vorderen Ende mit einer beweglichen, Hindernisse überrollenden Überrollstütze ausgestattet, wobei die Gabel an ihrem unteren Ende nach hinten schlittenartig ausgestellt bzw. abgeflacht, so daß zusätzlich zu der Federfunktion der Gabel selbst auch eine Rutschen der Wegfahrhilfe über Hindemisse ergänzend ermöglicht wird. Die Überrollstütze ist schwenkbar gelagert und mit einer Feder verbunden, die eine konstante Position der Stützte gewährleistet. Insbesondere wird auf diese Weise dafür Sorge getragen, daß die Stütze nach dem Überrollen eines Hindernisses wieder in die Grundstellung zurückschnellt. Die Feder sorgt aber auch dafür, daß die Überrollstütze immer vor der Laufrolle gehalten ist und nicht auf dieser aufliegt Eine optimale Hebelfunktionwird dadurch erreicht, daß der Radius der Überrollstütze selbst, die die geometrische Form eines Teiles eines Vollkreises darstellt, doppelt so groß ist wie der Radius des vorderen Laufrades. Querrillen innerhalb der Überrollstütze liefern ergänzend eine "Kletterhilfe". Mit der erfindungsgemäßen Stütze können leicht Hindernisse bis zu 50 mm überfahren werden, aber auch bei Hindernissen bis zu 100 mm erfüllt die Stütze noch ihren Zweck. Die Überrollstütze ist so konstruiert, daß sie leicht im Falle einer Abnutzung über eine haltende Achse und die Feder ausgewechselt werden kann.

Gabel gehalten ist, die ein Überrollen bzw. Rutschen ermöglicht. Diese Gabel ist an ihrem unteren Ende abgeflacht, so daß zusätzlich zu der Federfunktion der Gabel selbst auch eine Rutschen der Wegfahrhilfe über Hindernisse ergänzend ermöglicht wird. Die Überrollstütze ist schwenkbar gelagert und mit einer Feder verbunden, die eine konstante Position der Stützte gewährleistet. Insbesondere wird auf diese Weise dafür Sorge getragen, daß die Stütze nach dem Überrollen eines Hindernisses wieder in die Grundstellung zurückschnellt. Die Feder sorgt aber auch dafür, daß die Überrollstütze immer vor der Laufrolle gehalten ist und nicht auf dieser aufliegt. Eine optimale Hebelfunktionwird dadurch erreicht, daß der Radius der Überrollstütze selbst, die die geometrische Form eines Teiles eines Vollkreises darstellt, doppelt so groß ist wie der Radius des vorderen Laufrades. Querrillen innerhalb der Überrollstütze liefern ergänzend eine "Kletterhilfe". Mit der erfindungsgemäßen Stütze können leicht Hindernisse bis zu 50 mm überfahren werden, aber auch bei Hindernissen bis zu 100 mm erfüllt die Stütze noch ihren Zweck. Die Überrollstütze ist so konstruiert, daß sie leicht im Falle einer Abnutzung über eine haltende Achse und die Feder ausgewechselt werden-kann.

Weitere vorteilhafte Maßnahmen sind in den übrigen Unteransprüchen beschrieben. Die Erfindung wird nachfolgend näher beschrieben und ist in den Zeichnungen näher dargestellt. Es zeigt:
- **Figur 1**: Seitenansicht mit ausgeklappter Wippe zum Auffahren des Rades und erfindungsgemäßer Überrollstütze;
- **Figur 2**: Detailansicht des Hinterrades mit Exzenterbremshebel;
- **Figur 3**: Detailansicht im Querschnitt durch ein Hinterrad mit Exzenterbremshebel;
- **Figur 4**: Seitenansicht im Detail des Vorderrades mit Überrollstütze;
- **Figur 5**: schematischer Ablauf im Detail der Überrollsperre.

Die erfindungsgemäße Vorrichtung besteht aus einer Wanne 1 zur Aufnahme des defekten Rades und steht auf dem Untergrund 15. An der Wanne 1 sind die Laufrollen 5, 5a befestigt, wobei zwei am Ende der Wanne 1 und eine am vorderen Ende angeordnet sind. Die vordere Laufrolle 5 ist um ihre Hochachse schwenkbar in dem Lagerbock 6 gelagert, so daß ein leichtes Einlenken gewährleistet ist. Die Wanne 1 ist nach vorne durch ein Blech 7 abgeschlossen.

Den vorderen Anschlag für das Kraftfahrzeugrad bildet die drehbare Rolle 8, die über zwei Bleche 10 zur Lagerung der Rolle 8 gehalten wird. Die Welle 9 dient zur Lagerung der Rolle 8 und zugleich zur verwindungssteifen Verbindung der Haltebleche 10. Die beiden Wippen 12 dienen zum Hochklappen der Rolle 8 und der Haltebleche 10. Sowohl die Wippen 12 als auch die Haltebleche 10 sind drehbar mit der Wanne 1 über die Nieten 11 verbunden. Die Wippen 12 sind durch den Quersteg 13 verbunden, der zur Verstärkung der Halterung, sowie als Hebeldruckpunkt für das defekte Rad beim Auffahren dient.

Die hinteren Laufollen 5a sind über eine Welle 14 gelagert. Die Welle 14 ist mit der Wanne 1 verbunden. Über der Welle 14 liegt die Auffahrwippe 4 zum Auffahren des defekten Rades auf die Wegfahrvorrichtung. Beide Exzenterbremshebel 2 sind exzentrisch mit Spiel auf der Auffahrwelle 14 gelagert und werden durch eine Feder 3 unter Spannung gehalten, so daß sie jeweils nur eine von zwei möglichen Positionen stabil einnehmen können.

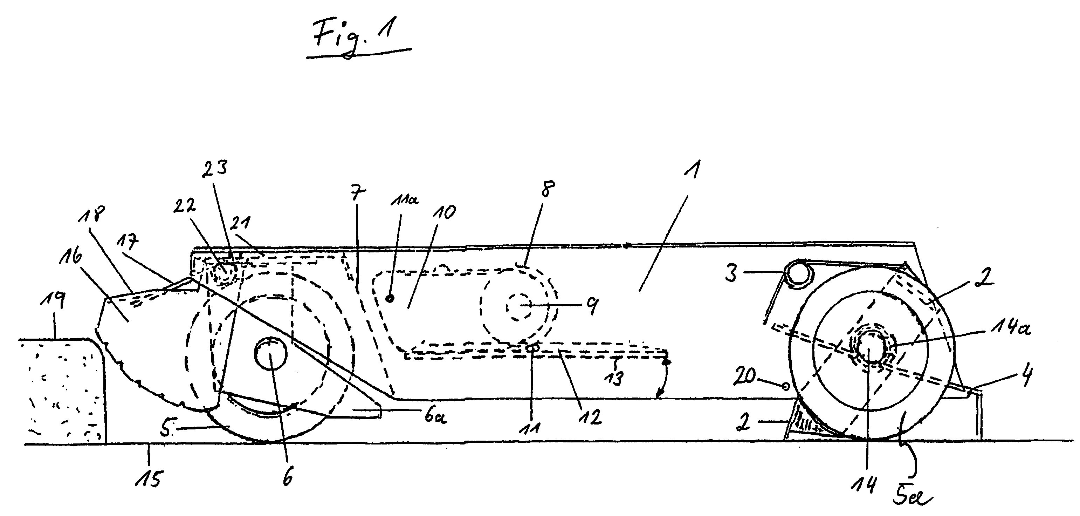

Die Fig. 1 zeigt diese erfindungsgemäße Vorrichtung in der Grundstellung zum Auffahren des defekten Rades. Die Auffahrwippe 4, die Wippe 12 zum Hochklappen der Rolle 8 sowie die beiden Exzenterbremshebel 2 sind von Hand zu schwenken. Das defekte Rad läuft von hinten über die Auffahrwippe 4 in die Wanne 1, wodurch die Auffahrwippe 4 umgeklappt und das defekte Rad (nicht dargestellt) nach hinten gegen Zurückrollen sichert.

Das defekte Rad läuft gleichzeitig auf die Wippe 12, wodurch die Rolle 8 hochklappt. Ein Überfahren der erfindungsgemäßen Vorrichtung wird dadurch sicher verhindert.

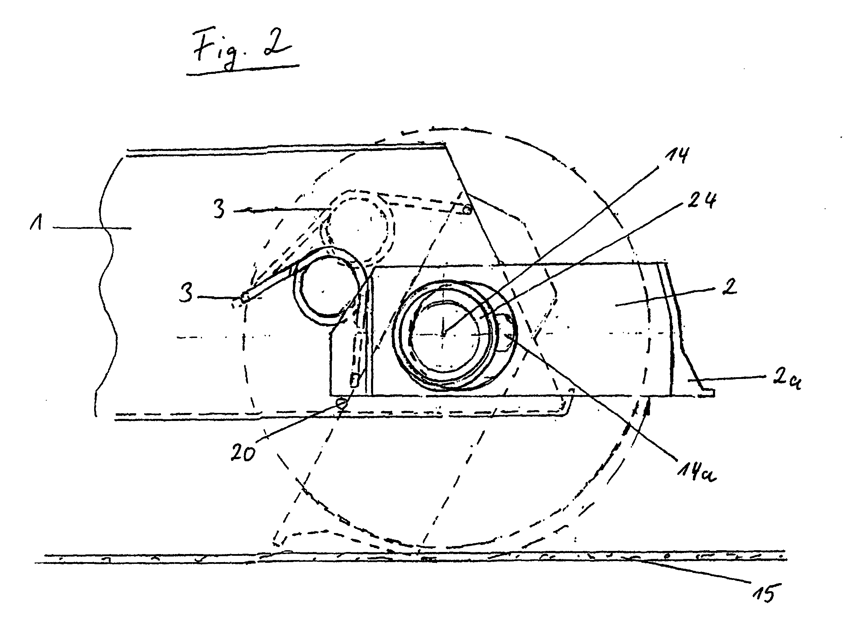

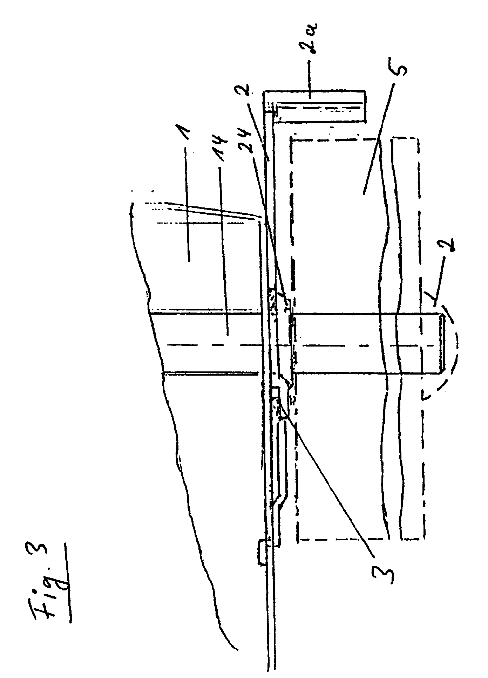

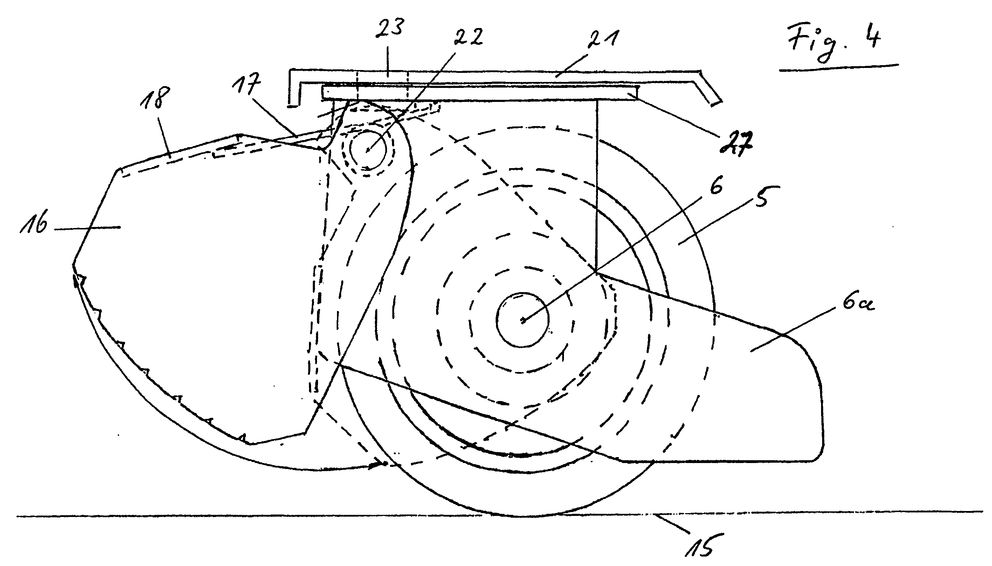

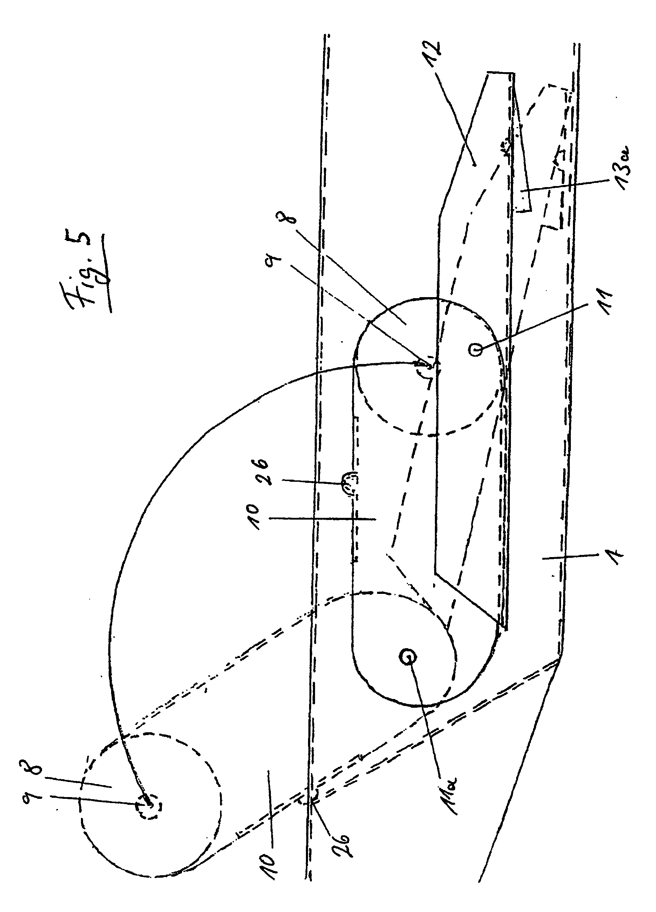

Durch die Bremsen 2 wird ein Wegrollen des Pannenrollers verhindert, da die Last des Kraftfahrzeugs voll auf die Bremskeile 2a (vgl. Fig. 2) drückt und dadurch ein Weiterrollen nicht möglich ist. Rollt der platte Reifen weiter, so kommt dieser auf die Wippe 12, welche am Ende beidseitig mit einem Quersteg 13 verbunden sind. Die Wippe 12 ist mit zwei Nieten 11 und 11a drehbar befestigt und wird nun nach unten gedrückt. Dabei drückt die Wippe 12 die Rolle 8 samt Halterung 10 nach oben bis zum Anschlag 7. Die Rolle 8 wird durch Endstücke auf einer durchgehenden, von beiden Seiten verschweißten Welle 9 gehalten. Die Seitenteile 10 der Überrollsperre sind zusätzlich durch ein Knotenblech 26 (mit Sigge), vgl. Figur 5, zur Stabilisierung verbunden. Um die drehbare Nietverbindung 11a vor einem Abscheren zu schützen, wurde ein Verhältnis von 1:1 festgelegt. Da der Anschlag des Knotenbleches 26 der Anlagedruckpunkt ist, wird ein Überrollen des defekten Reifens unterbunden. Durch den Druck des defekten Reifens gegen die Rolle 8 werden kurzzeitig die hinteren Räder 5a entlastet, so daß die Wegfahrsperre bzw. Bremse 2 leicht überfahren werden kann. Die Bremsen 2 klappen automatisch durch den Druck auf die Federn 3 nach hinten bis zum Anschlagpunkt 20.

In der in Fig. 2 gezeigten Brems- und Auffahrstellung liegen die Exzenterbremsen 2 sowohl an den beiden Laufrollen 5 als auch auf dem Untergrund 15 auf, so daß eine sichere Bremswirkung beim Auffahren gewährleistet ist. Die Bremskraft wird noch durch die Auflast beim Auffahren erhöht. Die Wirkung der Exzenterbremshebel 2a ist in der in Fig. 2 angedeuteten Position mit der Wirkung eines konventionellen Bremsklotzes für Kraftfahrzeugreifen zu vergleichen.

Erst wenn das defekte Rad gegen die Rolle 8 läuft, kippt der hintere Teil der Wanne 1 ein wenig in vertikaler Richtung an, so daß die Exzenterbremshebel 2 kurz entlastet werden und durch die Federn 3 automatisch nach hinten in die in Fig. 6 dargestellte Wegfahrstellung gedrückt werden. Die Exzenterbremshebel 2 können sich aufgrund ihrer exzentrischen Lagerung auf der Welle 14 in radialer Richtung bewegen. Hierdurch drücken die Federn 3 die Exzenterbremshebel 2 von den Laufflächen der Laufrollen 5 weg, schwenken sie in eine nahezu waagerechte Position so daß die Bremswirkung der Exzenterbremshebel aufgehoben wird.

Die Figur 2 zeigt, daß durch den Exzenter 14a die Bremsen 2 mit Bremskeilen 2a automatisch nach hinten gedrückt werden, wodurch ein vollständiges Freilaufen der Räder gewährleistet ist. Die Federn 3 werden zwangsweise durch die gekröpfte Bremshalterung 2 fest an die Wanne 1 gedrückt, so daß ein Anscheuern am Rad des Pannenrollers unmöglich ist.

Die Figur 1 zeigt ferner, daß der Hauptkörper 1 aus stabilem Stahlblech gekanntet, verschweißt und zusätzlich an der oberen Seite nach außen gekanntet ist, womit auch bei extremen Belastungen ein Ausbeulen bzw. Verformen unterbunden ist.

Am vorderen Ende der Wanne 1 ist ein Knotenblech 21 aus Stahlblech zur Stabilisierung eingeschweißt. In diesem Knotenblech 21 ist eine Niete 23 als Halterung für die vordere Gabel 6a eingeschweißt. Die Gabel 6a ist in Geradeausstellung zu beiden Seiten um 45° drehbar. Dies ist erforderlich, um ein Querstellen des Vorderrades 5 und somit ein Überfahren der Gabel 6a beim Auffahren zu verhindern. Die Gabel 6a ist aus Stahlblech gefertigt, auf eine Drehscheibe geschweißt und nach hinten (wie ein Schlitten) ausgestellt bzw. abgeflacht (siehe Fig. 1 und Fig. 3), um ein Überfahren von z.B. Eisenbahnübergängen zu ermöglichen. In einem solchen Fall kann also die das Rad 5 nur bis zur Gabel 6a bzw. der abgeflachten Rutsche in die Querrillen der (nicht gezeigten) Bahnrillen einsinken und somit leicht und ohne Schwierigkeiten überfahren werden.

Die vordere Achse 6 ist in der Gabel 6a bündig vernietet. Um dies zu ermöglichen, ist ein Gesenk in der Gabel, die nach innen durchgedrückt ist. Diese Durchkröpfung dient gleichzeitig als Anschlag auf der Vorderachse 6 am kugelgelagerten Vorderrad 5, wodurch ein Anschleifen des Vorderrades 5 an der Gabel 6a vermieden wird.

Da das Vorderrad 5 nur einen geringen Radius hat, gibt es oft Schwierigkeiten beim Auffahren an Tankstellen, Grundstücksauffahrten etc. . Aus diesem Grund ist an der vorderen Gabel 6a eine erfindungsgemäße Überrollstütze 16 montiert, die vorzugsweise aus Hartgummi oder einem Polymer besteht. Denkbar ist aber auch eine Metallstütze. Vorteilhaft ist, daß in die Überrollstütze Querrillen eingelassen sind, die quasi wie eine Leiter ein Überfahren eines Hindemisses erleichtern. Diese Überrollstütze 16 ist aus Stahl gefertigt, die mit einem Knotenblech zur Stabilisierung und gleichzeitig als Druckpunkt für die Feder 17 dient. Diese ist auf einer durchgehenden beweglichen Achse 22 montiert und an den Enden verschweißt. Die Feder 17, auf der Achse 22 ruhend, bewirkt ein ständiges Vorstehen der Überrollstütze 16. Hierdurch ist gesichert, alle Hindernisse bis 50 mm problemlos überfahren zu können. Da der Radius der Überrollstütze 16 zu demjenigen des Vorderrades 5 doppelt so groß ist, entsteht eine Hebelfuktion. Die Überrollstütze 16 hebelt dadurch das Vorderrad 5 der Wegfahrhilfe mühelos auf das Hindernis 19 bis das Vorderrad 5 wieder fasst (Laufflächenberührung) und schnellt danach sofort wieder nach vorne.

Parallel zu diesen Vorgängen wird die Wanne 1 durch das Auffahren des defekten Rades ein kleines Stück nach vorne geschoben, so daß sich die beiden Exzenterbremshebel 2,2a, wie in Fig. 1 und Fig. 2 dargestellt, vom Untergrund lösen, in dem sie sich automatisch (siehe oben) nach hinten wegdrehen und so ein Wegfahren mit der erfindungsgemäßen Vorrichtung ermöglichen.

### Bezugszeichen

- 1: Wanne zur Aufnahme des Rades
- 2: Exzenterbremshebel
- 2a: Bremskeil
- 3: Spiralfeder
- 4: Auffahrwippe
- 5: Laufrolle
- 5a: hintere Laufrolle
- 6: Lagerung für vordere Rolle
- 6a: Gabel der vorderen Rolle
- 7: Abschlußblech
- 8: Rolle
- 9: Welle
- 10: Halteblech zur Lagerung der Rolle
- 11: Niete
- 11a: Niete, beweglich
- 12: Wippe zum Hochklappen der Rolle
- 13: Quersteg
- 13a: angewinkelter Quersteg
- 14: Welle/Achse zur Lagerung der hinteren Laufrollen
- 14a: Exzenter zur Freigabe der Hinterräder
- 15: Untergrund
- 16: Überrollstütze
- 17: Feder für Überrollstütze
- 18: Quersteg zu 16
- 19: Hindernis
- 20: Bremsanschlag in Auffahrstellung und Fahrstellung
- 21: Knotenblech
- 22: Achse der Überrollstütze 16
- 23: Niete zu 22
- 24: Distanzscheibe
- 25: Starlockkappe zur Befestigung der Rolle 5
- 26: Sigge als Anschlag und Stabilisierung der Überrollsperre
- 27: Drehscheibe der Vorderradgabel

## Patentansprüche

1. Wegfahrhilfe, insbesondere zur Aufnahme von defekten Kraftfahrzeugrädem, bestehend aus einer Wanne (1) zur Aufnahme des defekten Rades sowie einer rückseitig angebrachten Auffahrwippe (4) zum Auffahren des defekten Rades und dem nachfolgenden rückwärtigen Sichem des Rades, wobei beim Auffahren des defekten Rades eine im vorderen Bereich der Vorrichtung über eine Welle (9) drehbar gelagerte Rolle (8) hochschwenkt, indem das defekte Rad eine Wippe (12) beim Auffahren nach unten drückt und diese dadurch ein Überfahren der Wegfahrhilfe verhindert und wobei gleichzeitig exzentrisch gelagerte Bremshebel (2), die ein Verrutschen der Vorrichtung beim Auffahren verhindern, ohne weiteres Tätigwerden des Benutzers gelöst und durch Federn (3) in die Wegfahrstellung hochgeschwenkt werden,
**dadurch gekennzeichnet, daß**
die Wegfahrhilfe an ihrem vorderen Ende mit einer beweglichen, Hindemisse überrollenden Überrollstütze (16) ausgestattet ist und die vordere Laufrolle (5) in einer Gabel (6a) gehalten ist, die schlittenartig nach hinten ausgestellt bzw. abgeflacht ist.

2. Wegfahrhilfe nach Anspruch 1, wobei die Überrollstütze (16) an der Wanne (1) über eine Schwenkachse (22) schwenkbar gelagert ist.

3. Wegfahrhilfe nach Anspruch 1 oder 2, wobei die Überrollstütze (16) über eine Feder (17), die mit der Wanne (1) federnd verbunden ist, ein Vorstehen der Überrollstütze (16) bewirkt.

4. Wegfahrhilfe nach Anspruch 1 oder 2 oder 3, wobei die Überrollstütze (16) über eine Feder (17), die auf der Überrollstütze (16) aufliegt eine fedemde Rückbewegung in die Grundstellung nach Überfahren eines Hindernisses (19) bewirkt.

5. Wegfahrhilfe nach wenigstens einem der vorhergehenden Ansprüche, wobei der Radius der Überrollstütze (16) doppelt so groß wie der Radius des vorderen Laufrades (5).

6. Wegfahrhilfe nach wenigstens einem der vorhergehenden Ansprüche, wobei die Überrollstütze (16) Querrillen zum leichteren Überfahren von Hindernissen (19) aufweist.

7. Wegfahrhilfe nach wenigstens einem der vorhergehenden Ansprüche, wobei Hindemisse (19) bis 100 mm überfahren werden können.

8. Wegfahrhilfe nach wenigstens einem der vorhergehenden Ansprüche, wobei das Material der Überrollstütze (16) ausgewählt ist aus der Gruppe Hartgummi, Polymer oder Metall.

9. Wegfahrhilfe nach wenigstens einem der vorhergehenden Ansprüche, wobei die Überrollstütze (16) austauschbar mit dem Wannenkörper (1, 22) verbunden ist.

10. Wegfahrhilfe nach Anspruch 1, wobei die Gabel (6a) auf eine Drehscheibe geschweißt ist.

11. Wegfahrhilfe nach Anspruch 1 oder 10, wobei die Gabel (6, 6a) mit einem Gelenk versehen ist.

## Claims

1. An auxiliary drive system, especially for receiving defective automobile wheels, consisting of a trough 1 for receiving the defective wheel, and a pivoting ramp 4 mounted at the rear to take the defective wheel, and the subsequent securing of the wheel from the rear, when the defective wheel is being driven onto the device, the roller 8 in the front, which is mounted on two retaining plates 10, and which can rotate on a shaft 9, is raised, as a result of the action of the ramp 12, that is connected by a crosspiece 13, and the ramp is forced down when the defective wheel is driven onto it, preventing the wheel from overrunning the device by ending in projections, which engage in the corresponding recesses of the retaining plates 10, and simultaneously the eccentrically mounted brake levers 2, which act on both sides, and are mounted together with the rear rollers 5 on a shaft 14, to prevent the device from sliding when the wheel is being driven on are activated without requiring any further action by the operator, and are raised into the withdrawal position by means of two springs 3, **characterised by the fact that,**
the auxiliary drive system is provided in its front with a movable, obstacles overrunning overrun support 16 and the front roller 5 is kept by a fork 6a, which is prolonged in a sledge like respectively flattened manner to the rear.

2. An auxiliary drive system according to claim 1, where the overrun support 16 is mounted moveable through the trough 1 by a pintle pin 22.

3. An auxiliary drive system according to claim 1 or 2, where an elastic coil 17, that is connected to the trough 1, causes the overrun support 16 to protrude.

4. An auxiliary drive system according to claim 1 or 2 or 3, where the overrun support 16, which is mounted through an elastic coil 17 laying on the overrun support 16, causes an elastic back movement into the basic position after driving over an obstacle 19.

5. An auxiliary drive system according to one or more of the proceeding claims, where the radius of the overrun support 16 is twofold of the radius of the front roller 5.

6. An auxiliary drive system according to one or more of the proceeding claims, where the overrun support 16 has cross sections for easier rolling over obstacles 19.

7. An auxiliary drive system according to one ore more of the proceeding claims, enabling to roll over obstacles 19 up to 100 mm.

8. An auxiliary drive system according to one ore more of the proceeding claims, where the material of the overrun support 16 is chosen from the groups of ebonite/vulcanite, polymers or metal.

9. An auxiliary drive system according to one ore more of the proceeding claims, where it is possible to change the overrun support 16, which is connected to the trough 1.

10. An auxiliary drive system according to claim 1, where the fork 6a is welded through a swivel plate.

11. An auxiliary drive system according to claims 1 or 10, where the fork 6, 6a is provided with a joint.

## Revendications

1. Dispositif auxiliaire permettant l'évacuation d'un véhicule, destiné en particulier à recevoir les roues défectueuses de véhicules à moteur, composé d'une caisse (1) servant à recevoir la roue défectueuse et d'une rampe basculante (4) située à l'arrière, destinée à faire monter la roue défectueuse et à l'empêcher de reculer ; un cylindre (8) mobile monté sur un arbre (9) et situé à l'avant du dispositif se soulevant lors de l'arrivée de la roue défectueuse, celle-ci abaissant lors de son arrivée un bras mobile (12) qui l'empêche de franchir le dispositif auxiliaire, des leviers de frein (2) à excentrique, qui empêchent le dispositif de glisser lors de l'arrivée dans la caisse de la roue défectueuse, étant en même temps débloqués sans autre intervention de l'utilisateur et mis en position haute de roulement par des ressorts (3),
**caractérisé par le fait que**
le dispositif auxiliaire permettant l'évacuation d'un véhicule est équipé à l'avant d'un dispositif d'aide au franchissement (16) d'obstacles et que la roue de devant (5) est maintenue dans une fourche (6a) qui est orientée vers l'arrière comme un chariot ou bien aplatie.

2. Dispositif auxiliaire permettant l'évacuation d'un véhicule selon la revendication 1, le dispositif d'aide au franchissement (16) étant monté sur la caisse (1) au moyen d'un axe (22) orientable.

3. Dispositif auxiliaire permettant l'évacuation d'un véhicule selon la revendication 1 ou 2, le dispositif d'aide au franchissement (16) ayant pour effet, par l'action d'un ressort (17) fixé de manière élastique à la caisse (1), d'amener une position saillante du dispositif d'aide au franchissement (16).

4. Dispositif auxiliaire permettant l'évacuation d'un véhicule selon la revendication 1 ou 2 ou 3, le dispositif d'aide au franchissement (16) étant muni d'un ressort (17) posé sur ce même dispositif d'aide au franchissement (16), ressort qui assure par un mouvement élastique le retour en position normale après le franchissement de l'obstacle (19).

5. Dispositif auxiliaire permettant l'évacuation d'un véhicule selon au moins une des revendications précédentes, le rayon du dispositif d'aide au franchissement (16) étant deux fois plus grand que le rayon de la roue avant (5).

6. Dispositif auxiliaire permettant l'évacuation d'un véhicule selon au moins une des revendications précédentes, le dispositif d'aide au franchissement (16) possédant des rainures transversales pour faciliter le franchissement des obstacles (19).

7. Dispositif auxiliaire permettant l'évacuation d'un véhicule selon au moins une des revendications précédentes et autorisant le franchissement d'obstacles (19) jusqu'à 100 mm.

8. Dispositif auxiliaire permettant l'évacuation d'un véhicule selon au moins une des revendications précédentes, le matériau du dispositif d'aide au franchissement (16) étant sélectionné parmi le groupe caoutchouc dur, polymère et métal.

9. Dispositif auxiliaire permettant l'évacuation d'un véhicule selon au moins une des revendications précédentes, le dispositif d'aide au franchissement (16) étant relié à la caisse (1, 22) de manière amovible.

10. Dispositif auxiliaire permettant l'évacuation d'un véhicule selon la revendication 1, la fourche (6a) étant soudée sur une plaque tournante.

11. Dispositif auxiliaire permettant l'évacuation d'un véhicule selon la revendication 1 ou 10, la fourche (6, 6a) étant articulée.
